# EUROPEAN PATENT APPLICATION

(11) **EP 4 733 090 A1**
(43) Date of publication of application: **29.04.2026**
(21) Application number: 24831119.3
(22) Date of filing: 26.06.2024
(51) Int. Cl.: B60C 23/00, B60C 23/10

(54) **WHEEL ROTOR FOR TYRE PRESSURE REFILL SYSTEMS**

(30) Priority: 26.06.2023 ES 202331138 U
(71) Applicant: Accesorios y Elevadores Valencia, S.L., 46530 Puzol (Valencia) (ES)
(72) Inventor: MORENO IBAÑEZ, Alberto, 46530 Valencia (ES)
(74) Representative: Isern Patentes y Marcas S.L.
(86) International application number: PCT/ES2024/070405
(87) International publication number: WO 2025/003546

(57) **Abstract**

The present invention relates to a rotor that can be used in vehicle wheels (in particular trailers and semi-trailers) as part of a tyre pressure refill system (TPRS).

Specifically, the wheel rotor (100) for a TPRS system comprises a rotary seal (4), and further comprises an inner body (1), closer to the wheel axle (103), and an outer body (2), further from said axle (103), wherein the two bodies (1, 2) comprise complementary screw threads (15, 16) for mutually assembling and disassembling same, and the axis of travel of said screw threads (15, 16) coincides substantially with the axis of rotation of the corresponding wheel, wherein the inner body (1) includes an opening for inserting a tube for the inlet of air into the rotor from the wheel axle (103) through the wheel hubcaps.

## Description

### Technical field

The present invention relates to the technical field of automatic vehicle tyre inflation systems. More specifically, it relates to a rotor that can be used in vehicle wheels (in particular trailers and semi-trailers) as part of a tyre pressure refill system (TPRS).

### Background of the invention

TPRS systems (Tyre Pressure Refill Systems) are used in certain vehicles, in particular trailers and semi-trailers, to measure the pressure of each tyre and automatically inflate it when necessary. The system monitors the pressure in all the tyres and, if said pressure drops, it adds air, usually from the air reservoir or tank which is also used for the vehicle's suspension. The system operates when the vehicle is both stationary and in motion, so that the air is usually supplied by means of a coaxial line with the wheel axle in the form of a stator and then, connected to said stator, a tube which, at the other end, leads to a rotor. This rotor is the component which, by means of a rotary seal, provides a sealed joint between the fixed or static part of the system (the aforementioned tube together with the stator) and the rotating part (the rotor body itself and a hose together with the inflation valve) which rotates with the wheel.

The present invention provides improvements to the rotor assembly used for these systems in such a way that, due to its construction and final assembly characteristics, it makes it easier to maintain the integrity of its connecting parts or elements (e.g., external threading of the rotor) while at the same time constituting a component that can be easily disassembled and, therefore, repairable and reusable with respect to some of its elements. These advantages will become clear from the following description in which the details of these technical features will be set out.

### Description of the invention

In order to achieve the aforementioned advantages and improvements, the following invention is provided.

The object of the present invention is a wheel rotor for a TPRS system. The type of rotor referred to in the present invention comprises a rotary seal. One of the features of this rotor is that it is divided into two parts which are coupled/uncoupled by mutual threading, i.e., the entire rotor assembly is divisible by said threading. This involves a first body, called the inner body, which is the one closest to the vehicle and through which the inflation air enters, and another body, called the outer body, which is normally visible in the hubcap area of the corresponding wheel. The arrangement of said mutual threading is such that the axis of the screw threads coincides substantially with the axis of rotation of the wheel on which said rotor is mounted.

According to another feature of the invention, the mutual threading consists of a female screw thread on the inner body and a complementary male screw thread on the outer body. According to an additional feature of the invention, related to the latter, the female screw thread is on the outer body and the complementary male screw thread is on the inner body.

According to another feature of the rotor of the invention, the part of the inner body through which a tube for the inlet of air from the tank is introduced comprises a hole with a size and dimensions such as to match those of the contour or outer section of the inlet tube.

Yet another additional feature of the rotor according to the invention relates to the fact that the aforementioned match between the hole made in the inner body for the air inlet tube and the tube itself has a certain clearance such that it absorbs or allows for misalignments that may occur between the two elements (rotor and inlet tube).

According to an additional feature, the aforementioned rotary seal is a so-called QR (Quad Ring) or X-ring.

Lastly, according to an additional feature of the invention, the material from which said rotary seal is obtained may be or include Viton GLT.

### Brief description of the drawings

To complement the foregoing description, figures are attached to support the following detailed description and depict, for illustrative and non-limiting purposes, the following:
Figure 1 shows a side view, partially exploded and partially sectional, of a rotor for a TPRS system, together with the wheel axle and the inflation valve.
Figure 2 is a side sectional view of an assembled rotor of the present invention.
Figure 3 shows an exploded view of the rotor in figure 2.

### Detailed description of the invention

A detailed description of the invention will be given below with reference to the attached drawings.

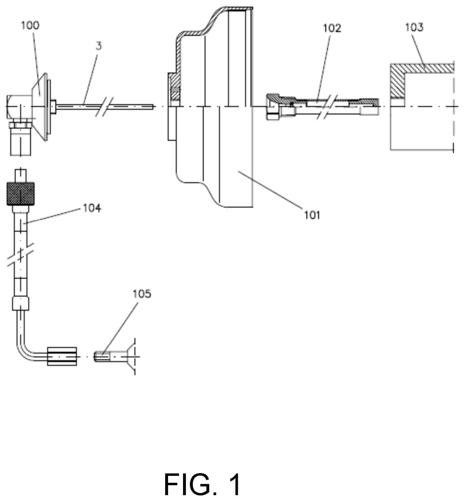

Figure 1 shows, by way of illustration, a rotor (100) of the invention for a TPRS system (Tyre Pressure Refill System). This figure is a representation of the components externally and will be used to explain, in a general way, the operating principle of a rotor of the invention and also of the conventional ones and their interaction and operational relationship with the relevant components of the vehicle on which it is mounted. As is well known and has been outlined in the background section of this document, the task of the rotor (100) is to drive the air from the inside of the wheel axle (103) (fixed part) to the outer side face of the wheel hubcap (101) (rotating part). In other words, the TPRS system in this case uses the hollow interior of the axle (103) to supply air to the wheels.

The stator (102), which is a fixed or static element, is mounted by means of sealed threading (more specifically, tapered gas thread) on the outer end of the wheel axle (103). Next, when the whole assembly is assembled and following in the direction of the wheel or, more specifically, the hubcap (101), there is the tube (3) for the inlet of air into the rotor (100) itself. Said tube (3) is also fixed and, in the final operating position, is installed tightly (with an O-ring) inside the stator (102). For this purpose, the rotor (100) will have been fixed by threading onto the outer face of the hubcap (101), and the illustrative dimensions of the components in figure 1 show how the tube (3) will be located inside the stator (102).

The outer part of the rotor (100) has a threaded connecting part or element for the hose (104). The other end of the hose (104) is connected to an inflation valve (105) of the corresponding wheel. It is obvious that the hubcap (101) will rotate when the vehicle is moving, as will the inflation valve (105), which in turn will drag the hose (104) and the rotor (100) in a rotating movement, the tube (3), the stator (102) and the wheel axle (103) remaining fixed, as mentioned above.

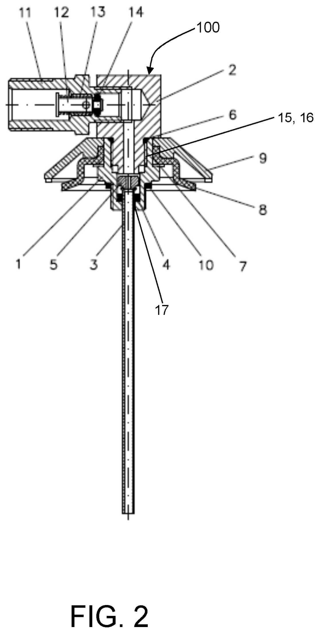

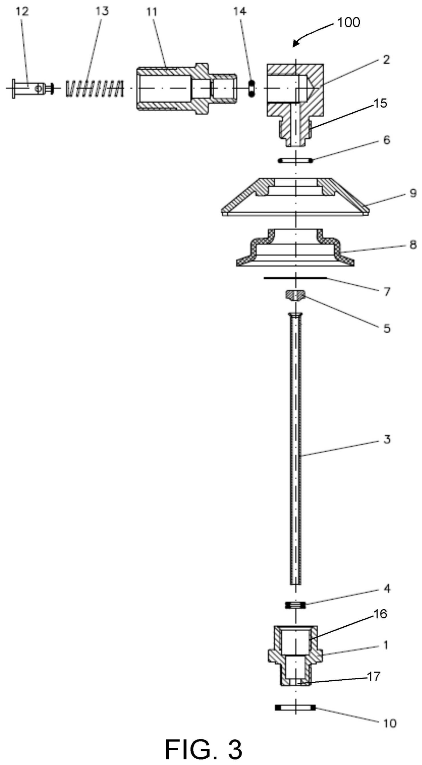

Figure 2 shows a sectional view of a rotor (100) of the present invention with some characteristic and distinguishing details thereof. All components and technical features of this rotor (100) can also be seen in figure 3, which corresponds to an exploded view of the illustration in figure 2.

The main feature of the rotor (100) is that it consists of an inner body (1) and an outer body (2) and that the two bodies (1, 2) can be assembled/disassembled by means of a complementary screw thread (15, 16). In the embodiment shown herein, the inner body (1) comprises a female screw thread (16) and the outer body (2) includes a male screw thread (15) complementary to the former, although the arrangement of the female screw thread (16) and male screw thread (15) could be the reverse of that described in relation to the inner body (1) and the outer body (2), since one of the essential aspects of the invention lies in the type of connection that can be easily assembled/disassembled and this can be materialised in the two ways mentioned. Furthermore, the end of the body (1) which is passed through by the tube (3) comprises, in the invention, a hole (17) fitted or adapted to the outer shape of the tube (3) so that a cap which is usually placed at said end for the rotary seal (4), also shown in figures 2 and 3, is no longer necessary, i.e., the flanges of the through hole (17) act as a cap for the seal (4). This has the advantage that it is no longer necessary to press said cap against the body (1) of the rotor (100); and this operation can sometimes cause damage to the mounting thread of the rotor (100) on the hubcap (101), with the consequent problems of coupling with the complementary screw thread of the latter, which are thus eliminated. Furthermore, the rotor (100) can be easily disassembled (complementary screw thread (15, 16)) so that its interior can be quickly accessed for repair, cleaning or replacement of, for example, the air inlet tube (3), the rotary seal (4) or the bearing (5). In relation to the latter, the function of the bearing (5) is to prevent or minimise wear and/or damage to the flared end of the tube (3) which could be caused by contact of said end with the internal space delimited by the inner body (1) and the outer body (2). Furthermore, the end of the tube (3) is flared or widened to prevent it from exiting this internal space through the through hole (17).

In relation to the dimensions of this through hole (17), misalignments can sometimes occur between the air inlet tube (3) and the axis of rotation of the rotor (100) and which have no influence on the operation of the system, so it would be desirable that the size of the hole (17) be adequate to absorb such misalignments, this being one of the technical features of one of the embodiments of the rotor (100).

Figure 3, starting from the lower part thereof, also shows a closing seal (10) that helps to fix the rotor (100) to the hubcap (101). As mentioned above, between the body (2) and the body (1) of the rotor there is the rotary seal (4), the flared end of the tube (3) and the bearing (5), which are shown in figure 2, assembled together. A washer (7) is fitted to a flange or step of the body (1), said washer acting as a retaining element for the rubber membrane (8). This membrane (8) closes, along its circumferential contour, against the outer face of the hubcap (101) and thus prevents the entry of external contaminants (water, dust, dirt, etc.) into the area where the tube (3) joins the rotor (100); at the same time, due to the material from which it is formed and its own configuration, it acts as an overpressure relief element as it can separate from the hubcap (101) when the air pressure increases too much in that area due to, for example, leaks in the system that could end up causing damage to the assembly. In addition to said membrane (8), there is an additional protective element above it in the form of a plastic housing (9). The membrane (8) and the housing (9), together with the washer (7), are therefore clamped between the body (1) and the body (2) of the rotor (100) in a recess in said body (1), as shown in figure 2. Furthermore, an O-ring (6) is provided on the contact circumference between the body (1) and the body (2) to ensure the sealing of this joint.

Connected to the body (2), at an inlet end perpendicular to that of the connection with the body (1), is a fitting body (11) which serves as a connection with the hose (104) shown in figure 1. The body (2) and the fitting body (11) are joined by means of a tapered gas thread in order to guarantee its sealing. The fitting body (11) contains a locking valve mechanism for the passage of air; this mechanism is made up of the following elements: a flap (12), a spring (13) and an O-ring (14). The air coming from the tube (3) does not pass through this mechanism, in the direction of the wheel, to the hose (104); when connected to the fitting body (11) at its end opposite to that corresponding to the body (2) of the rotor (100), it pushes the flap (12), opening said locking valve mechanism.

In relation to the rotary seal (4) at the flared end of the tube (3), its function is to maintain a level of sealing between the body (1) of the rotor (100) and said tube (3) without preventing or hindering the relative rotational movement between the two elements (fixed part: tube (3); rotating element: body (1)). In a preferred embodiment of the present invention, said seal (4) is a Quad Ring (QR) or also an X-ring, due to the shape of its cross-section. In other words, it is a ring-shaped seal, but the outer contour (of the ring) has four lobes, like an "X" but with rounded ends and angles. The advantages of using this type of seal are that a higher level of lubrication is achieved by the grease stored in the recess between the lobes of the "X" that close against the tube (3) and that greater flexibility is achieved in the level of misalignment that can be tolerated by the mechanism between the tube (3) and the longitudinal axis of the rotor (100). The preferred material for this seal may be the so-called Viton GLT, which can be used at temperatures up to 200°C at the upper limit (which is very useful because of the proximity to the brakes and the heat they can give off) and down to -40°C at the lower limit for use when moving in extremely cold areas.

A preferred embodiment of the invention has been described in the present description, although the scope of the invention is protected by the claims and, therefore, by all those details and variants included therein and which can be deduced from their interpretation.

## Claims

1. A wheel rotor (100) for a TPRS, comprising a rotary seal (4), and further comprising an inner body (1), closer to the wheel axle (103), and an outer body (2), further from said axle (103), wherein the two bodies (1, 2) comprise complementary screw threads (15, 16) for mutually assembling and disassembling same, and the axis of travel of said screw threads (15, 16) coincides substantially with the axis of rotation of the corresponding wheel, wherein the inner body (1) includes an opening for inserting a tube for the inlet of air into the rotor from the wheel axle (103) through the wheel hubcaps.

2. The rotor (100) according to claim 1, wherein the complementary screw thread (16) of the inner body (1) is female and the complementary screw thread (15) of the outer body (2) is male.

3. The rotor (100) according to claim 1, wherein the complementary screw thread (16) of the inner body (1) is male and the complementary screw thread (15) of the outer body (2) is female.

4. The rotor (100) according to any of the preceding claims, wherein the opening of the inner body (1) for inserting a tube (3) for the inlet of air into the rotor (100) is a through hole (17) fitted to the outer contour of said inlet tube (3).

5. The rotor (100) according to the preceding claim, wherein the through hole (17) is fitted to the outer contour of the inlet tube (3) with a clearance to allow for misalignments between the axis of rotation of the rotor (100) and the longitudinal axis of the tube (3).

6. The rotor (100) according to any of the preceding claims, wherein the rotary seal (4) is a QR or X-ring.

7. The rotor (100) according to any of the preceding claims, wherein the material of the rotary seal (4) comprises Viton GLT.
